# EUROPÄISCHE PATENTANMELDUNG

(11) **EP 1 447 793 A1**
(43) Veröffentlichungstag der Anmeldung: **18.08.2004**
(21) Anmeldenummer: 03002680.1
(22) Anmeldetag: 12.02.2003
(51) Int. Cl.: G10L 15/26, H04M 3/493

(54) **Benutzer-individuelle Einstellung eines sprachgesteuerten Internet- und Intranet-Browsers**

(71) Anmelder: Kuebler, Hans, Dr., 82205 Gilching (DE)
(72) Erfinder: Kuebler, Hans, Dr., 82205 Gilching (DE)

(57) **Zusammenfassung**

Einerseits ist eine Bedienung eines Terminals zum Zugriff auf das Internet oder Intranet die dem Menschen gewohnte und einfachste Art der Kommunikation. Andererseits bereitet die Sprachführung nicht nur mehr Aufwand sondern verursacht auch längere Transaktionszeiten bis tatsächlich die Abfrage oder die richtige Seite im Internet gefunden ist. Für repetitive Anfragen oder Arbeiten mit dem Internet / Intranet - etwa der Abfrage der eingegangenen e-mail Mitteilungen - lässt sich die Suche des Terminals und die Reaktion des Internets / Intranets auf die gewünschte Einstellung dadurch sehr vereinfachen, dass diese Vorgänge dem Benutzer genau angepasst werden, bzw. dass der Benutzer sie selbst mit seinen Ausdrücken individuell festlegt. Dies erzeugt zusätzlich eine weit bessere Benutzerfreundlichkeit der Bedienoberfläche, die die Akzeptanz eines Dienstes der mit Sprachsteuerung arbeitet, wesentlich erhöht.

Diese Individualisierung der Sprachkommunikation mit dem Terminal und dem Netzund Dienstzugang sind zum Patent angemeldet; Beispiele ihrer technischen Realisierung werden aufgezeigt.

## Beschreibung

### Problemstellung:

Der zwar wünschenswerte, aber heute noch nicht übliche Zugang zum Internet/Intranet mittels der Spracheingabe mit anschließender Spracherkennung benötigt wesentlich mehr Prozessschritte der Verarbeitung als die konventionelle Eingabe über Tastatur. Eine der konventionellen Bedienung entsprechenden gesprochenen Befehlseingabe würde wesentlich mehr Zeit erfordern, als die Benutzer heute gewöhnt sind und als für kurze Sessions zur Verfügung steht. Dies kann die breite Anwendung der an sich sehr sinnvollen Spracheingabe von Internet- Befehlen sehr behindern.

### Lösungsansatz:

Benutzeranalysen haben gezeigt, daß gerade bei häufiger Benutzung der Internet/Intranet- Funktionen bestimmte vom Benutzer bewußt oder unbewußt vorgenommene Vorgänge und Verfahren aus der Vielzahl, die zur Verfügung stehen, ausgewählt werden, offensichtlich, weil sie dem entsprechenden Benutzer als die geeigneten erscheinen und seiner Arbeitsweise entsprechen. Die Erfindung benutzt diese Erkenntnis, indem sie jeden Benutzer dazu auffordert, sich seine eigene Arbeitsweise der Abarbeitung der von ihm üblichen Vorgänge im Internet für sich selbst als persönliches Profil zu standardisieren. Diese benutzerspezifische Befehlsoberfläche soll dann zunächst auch jedesmal angewandt werden, wenn der Benutzer sich Zugang ins Internet/Intranet verschaffen möchte. Somit kann der Benutzer eben nach seinem persönlichen Standard im Internet/Intranet arbeiten.

### Patentidee:

Grundsätzlich ist zu unterscheiden, ob Benutzer des Internets für das System anonym bleiben (können), oder ob die Identifizierung zwangsweise erforderlich ist, wie etwa zur Überwindung des Firewalls eines Intranets oder zur Sprecher- bezogenen Spracherkennung. Sofern die Identifizierung des Sprechers systembedingt erforderlich ist, wird in das System, ob dezentral im Terminal oder vorzugsweise zentral im Server angeordnet, auch eine Vorrichtung eingebracht, mittels der der Sprecher seine Bedienoberfläche mit gestalten kann, um sich so rascher in die Funktionen des Internets/Intranets einzuschalten als dies unter normalen Bedienungsmethoden möglich ist.

Die Idee der Erfindung ist, die Sprecheridentifizierung sei es zur benutzerspezifischen Spracherkennung oder zur Erreichung der Zutrittserlaubnis ins Intranet zu benutzen, um eine zusätzliche Funktion zu aktivieren, die die Sprecher- spezifische Bedienoberfläche beinhaltet. Diese Bedienoberfläche kann der Benutzer ganz nach eigenen Vorstellungen gestalten, insbesondere bezüglich der Reihenfolge der Funktionen sowie der Erkennungsworte für die einzelnen Funktionen, wie auch des Ablaufs dieser aufgerufenen Funktion. Das kann z. B. so geschehen, dass wenn der Benutzer seine Einschaltbestätigung vom System erhalten hat und damit online mit dem Intranet verbunden ist, er dann etwa das Wort "e-mail" sagt, darauf wird ihm ohne weiteren Befehl seine neu eingegangene Post vorgelesen. Nach jeder gelesenen Nachricht wird z. B. auf einen weiteren Befehl gewartet, der etwa "weiter" heißen kann oder "antworten", je nach dem was der Benutzer als nächstes machen möchte. Durch einen von ihm gewählten Befehl kann er auch die e-mail Funktion stoppen (etwa "StopStop"), um sich einer für diesen Augenblick wichtigeren Funktion zu zuwenden, wie etwa "Termine" oder "Presse"- Clips, oder "Besprechung ..." (bzw. deren Vorbereitung durch Vorlesen der Tagesordnung, der Titel der dazu zugesandten Unterlagen etc). In dieser sprecherspezifischen Bedienoberfläche ist vorzugsweise eine Reihenfolge der üblicherweise genutzten Funktionen voreingestellt. Sie kann jedoch durch einen Befehl (etwa "StopStop") angehalten werden und andere Funktionen können aufgerufen werden. Alle diese Funktionen sind vorzugsweise direkt durch den Benutzer für seine spezifischen Zwecke voreingestellt. Bei einem Travelservice ist etwa eingegeben, dass der Benutzer bestimmte Vorlieben und Abneigungen hat, etwa möchte er morgens sehr früh wegfahren oder -fliegen, bzw. umgekehrt; oder er übernachtet in einem Hotel der Kategorie X; oder er fliegt Economy Class innerhalb Europas, jedoch Business Class nach Übersee. Das Ziel ist die Benutzung so zu gestalten, dass alle repetitiven Vorgänge schon voreingestellt sind und ihn somit nicht mehr unterwegs bei seiner mobilen Büroarbeit aufhalten. Diese Voreinstellung kann sinnvollerweise über entsprechende Angaben in den entsprechenden Webseiten im Intranet erfolgen (Siehe dazu beigelegtes Ablaufdiagramm über eine solche Abfrage zur Voreinstellung).

Kernpunkt ist, dass bei Eingabe des jeweiligen Zugangscodes, der sofort zu der Benutzer- spezifischen Spracherkennung führt, auch gleich die Benutzer- spezifische Befehlsoberfläche aktiviert wird. Der Benutzer kann dann sofort mit den für ihn üblichen Vorgängen der Bearbeitung beginnen.

Der sprachgesteuerte Zutritt zum Internet/Intranet nach der Erfindung ist dadurch **gekennzeichnet**,

## Patentansprüche

1. **dass** eine Benutzer- spezifische oder Benutzergruppen- spezifische Sprachbefehlsoberfläche verwandt wird, die in einem Terminal oder vorzugsweise im Netz (Server) voreingestellt ist

2. **dass** die Benutzer- spezifische Spracherkennung automatisch die Benutzer- spezifische Befehlsoberfläche nach Anspruch 1 initiiert

3. **dass** die nach Anspruch 2 initiierte Befehlsoberfläche vom Benutzer selbst über ein entsprechendes Abfrage- Menü, das er im Internet/Intranet aufrufen kann, direkt festgelegt wird (Siehe Schaubild des Flussdiagramms eines Abfragemenüs im Anhang).

4. **dass** das nach Anspruch 3 dargestellte Abfrage- Menü bei der Installation des Benutzer- spezifischen, sprachgesteuerten Netzzuganges automatisch geöffnet wird, sobald die Benutzer- spezifischen Zutrittskriterien bei der Installation festgelegt wurden.

5. **dass** anschließend das Abfrage- Menü nach Anspruch 4 nur noch erreicht werden kann, wenn die Benutzer- spezifischen Zutrittskriterien erfüllt wurden und - sofern erwünscht - noch weitere Kriterien (Passworte) erfüllt wurden.

6. **dass** die vom Benutzer einzuhaltende, nach Anspruch 4 festgelegte, Benutzer- spezifische Befehlsoberfläche als weiteres Kriterium für die Zutrittsberechtigung zu den Internet/Intranet- Diensten verwandt werden kann.
